# EUROPEAN PATENT APPLICATION

(11) **EP 4 840 555 A1**
(43) Date of publication of application: **18.11.2026**
(21) Application number: 24916963.2
(22) Date of filing: 26.11.2024
(51) Int. Cl.: B07C 5/342

(54) **SORTING DEVICE AND SORTING METHOD**

(30) Priority: 11.01.2024 JP 2024002274
(71) Applicant: Canon Kabushiki Kaisha, Tokyo 146-8501 (JP)
(72) Inventor: ICHIKAWA Kento, Tokyo 146-8501 (JP); WATANABE Daisuke, Tokyo 146-8501 (JP)
(74) Representative: TBK
(86) International application number: PCT/JP2024/041768
(87) International publication number: WO 2025/150278

(57) **Abstract**

A sorting device includes: a conveyance means configured to convey a workpiece using a conveyor belt; a position detection means configured to detect a position of a workpiece using a difference between an image including the workpiece on the conveyor belt and a background image excluding the workpiece; a determination means configured to determine a type of the workpiece at the position detected by the position detection means; and an update means configured to update the background image.

## Description

### TECHNICAL FIELD

The present invention relates to a sorting device and a sorting method.

### BACKGROUND ART

Recycling of using plastic products as materials of resin components again has been required. However, predetermined plastics nned to be sorted out as plastics to be recycled from a mixture in which a plurality of types of plastics are mixed and various colors are included. Accordingly, a sorting device (a resin sorting device) that sorts out a predetermined plastic from a mixture including various types of plastics has been developed.

For example, a device that identifies a resin type by irradiating a resin with measuring light and analyzing reflected light is known as a resin sorting device. In this case, near-infrared spectroscopy is mainly used. However, since carbon black used for coloring of black plastics absorbs near-infrared light, black plastics cannot be measured. On the other hand, with resin identification based on Raman spectroscopy, a black plastic can also be measured, and thus plastics can be maximally reused.

In Patent Document 1, a technique of identifying types of resins and sorting the resins by acquiring a Raman scattering signal from resins flowing on a conveyor belt is described.

In Patent Document 2, a technique of rapidly identifying a large amount of resins by irradiating resins flowing on a conveyor belt with Raman light to follow the resins is disclosed. Measurement of a black plastic requires a longer measurement time than measurement of plastics of other colors. The measurement time is secured by causing measurement light to follow moving samples.

### Citation List

### Patent Document

Patent Document 1: Japanese Patent Application Laid-Open No. 2013-36971
Patent Document 2: Japanese Patent Application Laid-Open No. 2023-167533

### SUMMARY OF THE INVENTION

### Technical Problem

The sorting device disclosed in Patent Document 2 sets a path along which a workpiece is irradiated with measurement light (hereinafter referred to as a tracking path). Since the tracking path is set on the basis of a workpiece on a conveyor belt, a workpiece needs to be recognized before the setting, and the workpiece is recognized on the basis of a difference in luminance between the conveyor belt and the workpiece. However, since there is a difference in luminance for dirt or scratches on the conveyor belt, dirt or scratches may be erroneously recognized as a workpiece.

When erroneous recognition occurs, the tracking path is set for the dirt or scratches, and thus useless processing occurs. Occurrence of useless processing may make a tracking path including a workpiece to be identified not be set due to an upper limit of the number of tracking times per unit time.

By decreasing the number of workpieces to be conveyed or decreasing a conveying speed, the number of workpieces to be tracked can be increased, but the number of processed workpieces per unit time (hereinafter referred to as a "throughput") is decreased. In order to correctly recognize a workpiece and to enhance tracking efficiency, it is necessary to curb erroneous recognition due to dirt or scratches on a conveyor belt and to curb a decrease in throughput.

The present invention was made to solve the aforementioned problem, and an objective thereof is to provide a sorting device that can curb erroneous recognition and curb a decrease in throughput.

### Solution to Problem

In order to achieve the aforementioned objective, a sorting device according to the present invention includes: a conveyance means configured to convey a workpiece using a conveyor belt; a position detection means configured to detect a position of a workpiece using a difference between an image including the workpiece on the conveyor belt and a background image excluding the workpiece; a determination means configured to determine a type of the workpiece at the position detected by the position detection means; and an update means configured to update the background image. Advantageous Effects of Invention

According to the present invention, it is possible to realize a sorting device that can curb erroneous recognition and curb a decrease in throughput.

### BRIEF DESCRIPTION OF DRAWINGS

FIG. 1 is a diagram illustrating an example of a hardware configuration of a sorting device according to a first embodiment of the present invention.
FIG. 2 is a functional block diagram illustrating an example of a functional configuration of the sorting device according to the first embodiment of the present invention.
FIG. 3 is a side view illustrating an example of a hardware configuration of a sorting system 300 according to the first embodiment of the present invention.
FIG. 4 is a flowchart illustrating an example of a process flow in the sorting system using the sorting device according to the first embodiment of the present invention.
FIG. 5 is a flowchart illustrating a flow example of a workpiece sorting process (Step S404) in FIG. 4.
FIGS. 6(A) and 6(B) are diagrams illustrating a setting example of a tracking path according to the first embodiment of the present invention.
FIG. 7 is a side view illustrating a hardware configuration of a sorting system according to a second embodiment.
FIG. 8 is a flowchart illustrating a flow example of a workpiece sorting process that is performed by the soring device according to the second embodiment.
FIG. 9 is a flowchart illustrating a flow example of a workpiece sorting process according to a third embodiment.
FIG. 10 is a diagram schematically illustrating an area of a conveyor belt of a sorting device according to the third embodiment.
FIG. 11 is a side view illustrating a hardware configuration of a sorting system according to a fourth embodiment.
FIG. 12 is a flowchart illustrating a flow example of a workpiece sorting process in a sorting device according to the fourth embodiment.

### DESCRIPTION OF EMBODIMENTS

Hereinafter, embodiments of the present invention will be described with reference to the accompanying drawings. The present invention is not limited to the following embodiments. In the drawings, the same members or elements will be referred to by the same reference signs, and repeated description will be omitted or simplified.

### <First embodiment>

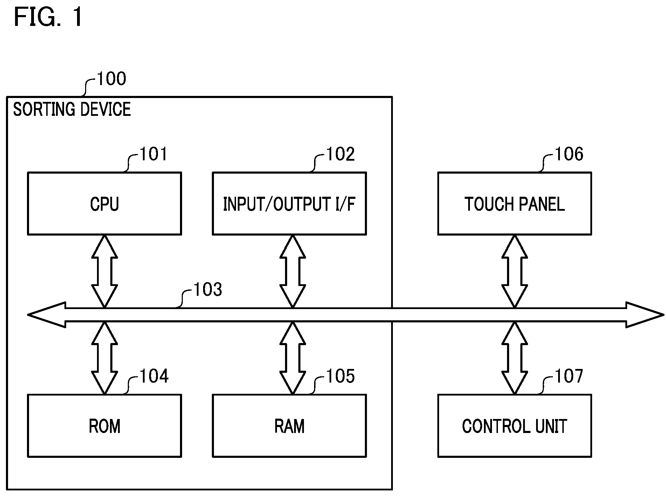

FIG. 1 is a diagram illustrating an example of a hardware configuration of a sorting device according to a first embodiment of the present invention. The sorting device 100 includes a CPU 101, an input/output I/F 102 with an external storage device, a ROM 104, and a RAM 105, which perform data exchange via a bus 103.

A touch panel 106 and a control unit 107 are connected to the sorting device 100 and exchange data via the bus 103. The touch panel 106 and the control unit 107 may be provided in the same housing as the sorting device or may be provided in a housing different from that of the sorting device.

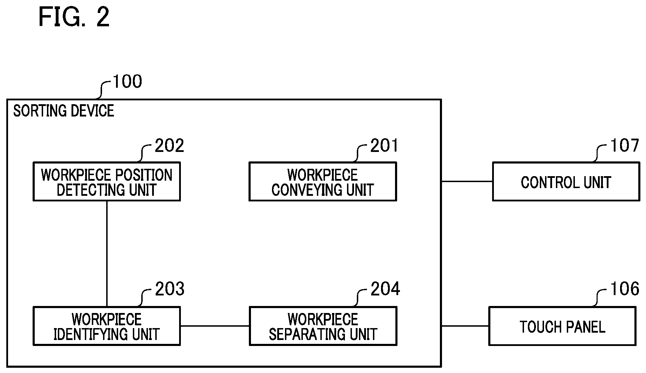

FIG. 2 is a functional block diagram illustrating an example of a functional configuration of the sorting device of the first embodiment of the present invention. Some of functional blocks illustrated in FIG. 2 are realized by causing the CPU 101 which is a computer in the sorting device to execute a computer program stored in a memory which is a storage medium.

However, some or all thereof may be realized by hardware. A dedicated circuit (ASIC), a processor (a reconfigurable processor or a DSP), or the like can be used as the hardware. The functional blocks illustrated in FIG. 2 may not be incorporated into the same housing and may be constituted by different devices connected to each other via a signal line.

A CPU which is a computer or the like is incorporated into the control unit 107 and serves as a control means for controlling operations of the constituents of the sorting device or the sorting system on the basis of a computer program stored in a memory which is a storage medium as a whole.

For example, external units such as an irradiation unit of near-infrared light or laser light, a camera, and an air jet which are included in the sorting system are controlled by the control unit 107. The touch panel 106 is used to instruct starting/ending of the sorting device 100 or to output a current state.

The sorting device serves as a device that sequentially identifies workpieces on a workpiece conveying unit and separates the workpieces for each identification result. In the present embodiment, objects which are conveyed as workpieces are not limited, but, for example, it is assumed herein that resin pieces are conveyed as workpieces.

The sorting device 100 includes a workpiece conveying unit 201. The workpiece conveying unit is, for example, a belt conveyor that loads and conveys resins. Here, the workpiece conveying unit 201 serves as a conveyance means for performing a conveyance step of conveying a workpiece using a conveyor belt.

A workpiece position which is a position of a workpiece such as a resin conveyed by the workpiece conveying unit is detected by a workpiece position detecting unit 202. Here, the workpiece position is detected, for example, on the basis of a difference between a background image of a belt conveyance surface on which a workpiece is not placed and an image including a workpiece on the conveyor belt. Here, the workpiece position detecting unit 202 serves as a position detection means for detecting a workpiece using a difference between an image including a workpiece on the conveyor belt and a background image excluding the workpiece.

A workpiece identifying unit 203 identifies a resin type of the workpiece at the detected workpiece position. For example, types of resins are identified by sequentially irradiating workpieces such as resins with laser light in a predetermined tracking path and acquiring a Raman scattering signal.

Alternatively, the types of resins may be identified by irradiating the resins with near-infrared light and analyzing reflected/transmitted light therefrom. In the present embodiment, the identification means is not particularly limited. Here, the workpiece identifying unit 203 serves as a determination means for determining a type of the workpiece at the position detected by the position detection means.

When the identification process in the workpiece identifying unit 203 is completed, a workpiece separating unit 204 receives a result from the workpiece identifying unit and separates a resin to be identified and a resin not to be identified. For example, resins are separated according to the types thereof and are stored in a box in which a resin to be identified should be stored.

These functional units are realized by causing the CPU of the control unit 107 to load a computer program stored in the ROM to the RAM and to perform processes based on flowcharts which will be described later. For example, when the functional units are constituted by hardware in place of at least some of software processes performed by the CPU, arithmetic units or circuits corresponding to the processes of the functional units described herein may be constructed.

A configuration of a system (hereinafter, referred to as a sorting system) that includes the device according to the present embodiment, sequentially identifies workpieces such as resins supplied on the belt conveyor, and separates the workpieces for each identification result will be described below.

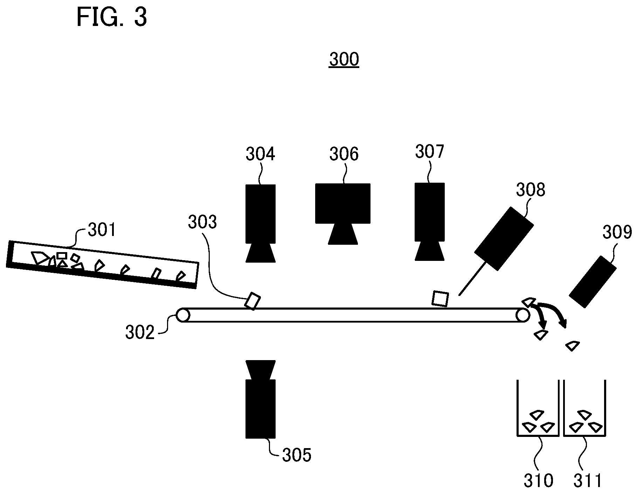

FIG. 3 is a side view illustrating an example of a hardware configuration of a sorting system 300 according to the first embodiment of the present invention. The sorting system 300 supplies workpieces 303 such as resins supplied from an external belt conveyor 301 to a belt conveyor 302 of the sorting system 300 and sorts the resins.

The sorting system 300 includes a workpiece conveyance surface imaging camera 304, a conveyor belt imaging camera 305, a length measuring instrument 306 that measures an amount of movement of a conveyor belt, a workpiece-identification camera 307, and a laser irradiation device 308.

The workpiece conveyance surface imaging camera 304 is used for the workpiece position detecting unit 202 to detect a position of a workpiece 303 such as a resin conveyed by the belt conveyor. The conveyor belt imaging camera 305 is used to acquire an image of a belt conveyance surface on which no workpiece 303 is placed as a background image.

The length measuring instrument 306 is used to detect an amount of movement or a moving speed of the belt. The workpiece-identification camera 307 and the laser irradiation device 308 are used for the workpiece identifying unit 203 to identify a type of a resin.

An air jet 309 ejects air to a resin with the operation of the workpiece separating unit 204 of the device according to the present embodiment. Accordingly, control is performed such that a workpiece 303 such as a resin to be recovered is introduced into a collection box 310 and a resin to be discarded is introduced into another box 311.

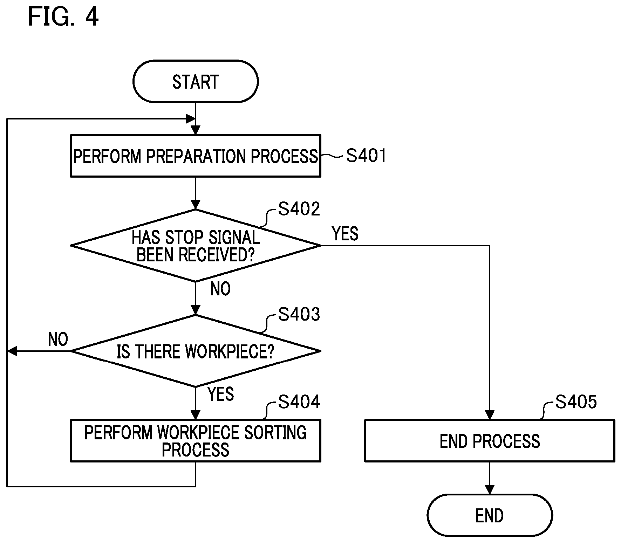

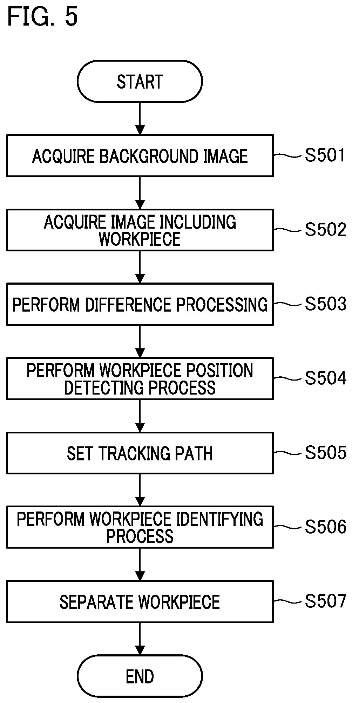

FIG. 4 is a flowchart illustrating an example of a process flow in the sorting system using the sorting device according to the first embodiment of the present invention. FIG. 5 is a flowchart illustrating a flow example of a workpiece sorting process (Step S404) in FIG. 4. The processes of the steps in the flowcharts illustrated in FIGS. 4 and 5 are sequentially performed by causing a CPU which is a computer in the sorting device 100 or the control unit 107, or the like to execute a computer program stored in the memory.

A process flow of sorting workpieces 303 such as resins will be described below with reference to FIGS. 4 and 5. First, when it is instructed to start an operation using the touch panel 106, the flow illustrated in FIG. 4 starts. In Step S401, the CPU performs a preparation process. That is, supply of electric power to the constituent units (such as the air jet, the cameras, the laser irradiation device, and the belt conveyor) of the sorting system 300 is started such that these units transition to an operable state.

When the preparation process is completed, the CPU determines whether a stop signal has been received in Step S402. The stop signal may be issued when it is instructed to stop the operation using the touch panel 106 or may be issued when a problem of safety occurs in the system.

When it is determined in Step S402 that a stop signal has been received, the process flow proceeds to Step S405, an ending process is performed, the system is immediately stopped, and the process flow of FIG. 4 ends.

When it is determined in Step S402 that a stop signal has not been received, the CPU determines whether there is a workpiece 303 on the belt conveyor in Step S403.

The process flow returns to Step S401 when it is determined in Step S403 that there is no workpiece 303, and the process flow proceeds to Step S404 to perform a workpiece sorting process in the sorting device when it is determined in Step S403 that there is a workpiece. Details of Step S404 will be described below with reference to FIG. 5.

FIG. 5 is a flowchart illustrating a flow example of a workpiece sorting process (Step S404) in FIG. 4. When the flow illustrated in FIG. 5 starts, a background image is acquired in Step S501. That is, the background image is updated by periodically receiving an image of the conveyor belt immediately before a workpiece 303 is placed using the conveyor belt imaging camera 305. Here, the conveyor belt imaging camera 305 serves as an imaging means for imaging a conveyance surface of the conveyor belt.

Here, Step S501 serves as an update step (an update means) of updating the background image and updates the background image on the basis of the image acquired by the imaging means when a workpiece is not placed on the conveyance surface of the conveyor belt. Dirt on the conveyor belt also includes, for example, a partial change in color or reflectance due to aging of the surface of the conveyor belt. That is, the background image includes dirt or scratches on the conveyor belt.

After the background image has been acquired, an image of a workpiece placement surface on which a workpiece 303 is placed is acquired, in Step S502. That is, an image of a workpiece 303 on the conveyor belt is received from the workpiece conveyance surface imaging camera 304 in order to acquire the image of the workpiece placement surface.

After the image of the workpiece placement surface has been acquired, difference processing of recognizing a workpiece 303 through a threshold value process of a luminance value obtained from a difference in image between the conveyor belt and the workpiece placement surface is performed in Step S503. In order to match the luminance values of the workpiece conveyance surface imaging camera 304 and the conveyor belt imaging camera 305, the same illumination system is used, or luminance level adjustment or gain adjustment of the workpiece conveyance surface imaging camera 304 and the conveyor belt imaging camera 305 is performed.

In this way, in the present embodiment, the background image immediately before a workpiece 303 is placed is acquired in Step S501, and the background image updating process is performed in Step S503 using the background image. In the present embodiment, while the conveyor belt goes around once, the background image including dirt or scratches is updated at least once.

Then, in Step S504, the CPU performs a workpiece position detecting process. That is, a size or a position of each workpiece 303 is detected by comparing luminance data acquired through difference processing with a predetermined threshold value. Here, Step S504 serves as a position detecting step of detecting a position of a workpiece using a difference between an image including a workpiece on the conveyor belt and a background image excluding the workpiece.

Then, in Step S505, the CPU sets a tracking path for laser light from the laser irradiation device 308 on the basis of the recognized workpieces 303. Here, Step S505 serves as a tracking path setting step (a tracking path setting means) of setting a tracking path on the basis of a position of a workpiece.

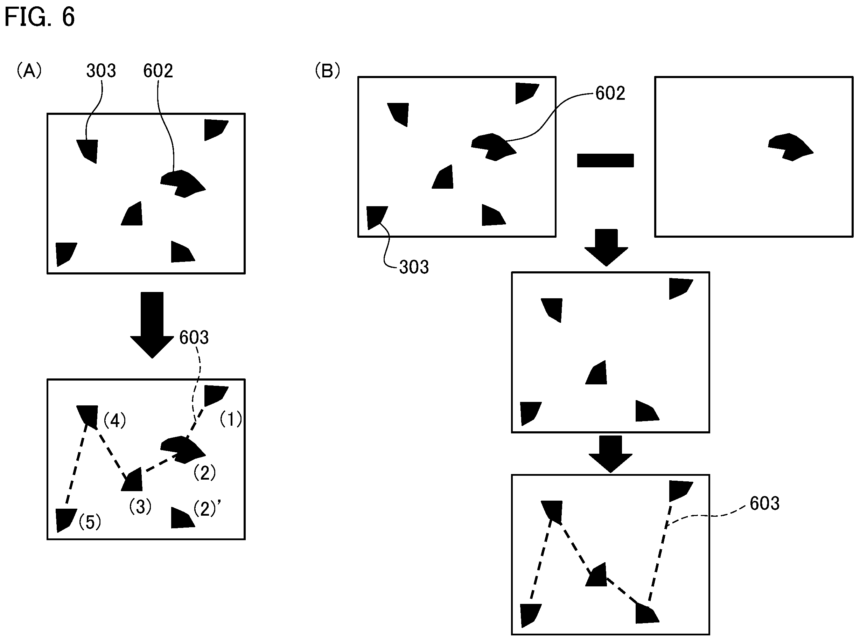

FIGS. 6(A) and 6(B) are diagrams illustrating a setting example of a tracking path according to the first embodiment of the present invention, and FIG. 6(A) is a diagram illustrating an example of a tracking path. A tracking path 603 which is a path which is sequentially irradiated with laser light is set sequentially from the start point in the conveyance direction on the basis of the position of the recognized workpieces 303.

When recognized workpieces are arranged in a direction perpendicular to the conveyance direction such as (2) and (2)' in FIG. 6(A), for example, the workpiece located on the upper side in FIG. 6(A) is determined to be preferentially tracked. At that time, when dirt or scratches 602 on the conveyor belt is erroneously recognized as a workpiece, a tracking path including the dirt or scratches is set.

FIG. 6(B) is a diagram illustrating a setting example of a tracking path when detection of a position is performed using a previous background image including dirt or scratches according to the present embodiment. It is possible to generate a path tracking only the workpieces 303 by performing difference processing on the previous background image including the dirt or scratches 602.

Accordingly, even when dirt or scratches 602 are newly generated, it is possible to efficiently track workpieces without erroneously recognizing the dirt or scratches as a workpiece. After the tracking path has been set in Step S505, the CPU performs a process of identifying resin types of the workpieces 303 in Step S506.

Accordingly, the resin types are identified, for example, by causing the laser irradiation device 308 to irradiate the workpieces 303 with laser light on the basis of the set tracking path and imaging reflected light (Raman scattering light) thereof using the workpiece-identification camera 307.

Here, Step S506 serves as a determination step of determining a type of a workpiece at a position detected in the position detecting step. Known techniques can be used to identify a resin using Raman scattering light, and description thereof will be omitted.

In Step S507, the CPU performs workpiece separation on the basis of the identification result of the identification process of Step S506. For example, the CPU controls the air jet 309 such that the workpieces 303 are sorted and stored in a collection box 310 or another box 311 according to the identified resin types. When this series of processes are completed, the process flow illustrated in FIG. 5 ends.

As described above, in the present embodiment, since the background image is updated with a background image including a place with luminance different from that of the conveyor belt such as dirt or scratches newly generated on the conveyor belt immediately before the workpiece identifying process is performed, it is possible to reduce the number of identification processes for stains or scratches on the conveyor belt. As a result, it is possible to prevent a decrease in throughput.

An example in which workpieces 303 are separated into two boxes including a collection box and another box has been described above, but the present embodiment is not limited to the example of separation into two boxes. Workpieces may be separated into three or more boxes by resin types such as ABS, polystyrene, polyethylene, and polypropylene.

### <Second embodiment>

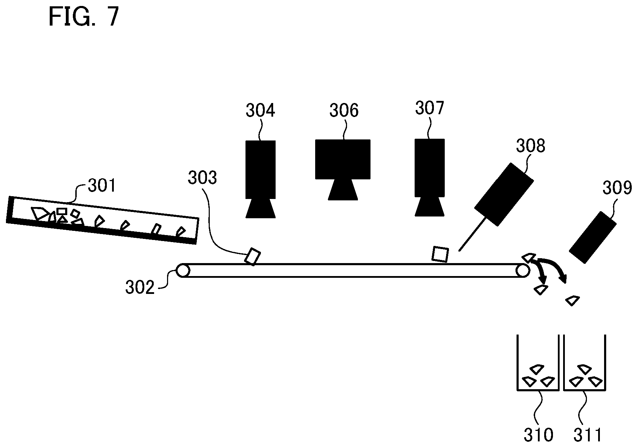

FIG. 7 is a side view illustrating a hardware configuration of a sorting system according to a second embodiment. The same constituents as in FIG. 5 will be referred to by the same reference signs. This configuration is different from the example illustrated in FIG. 5, in that the camera for acquiring a background image is not provided.

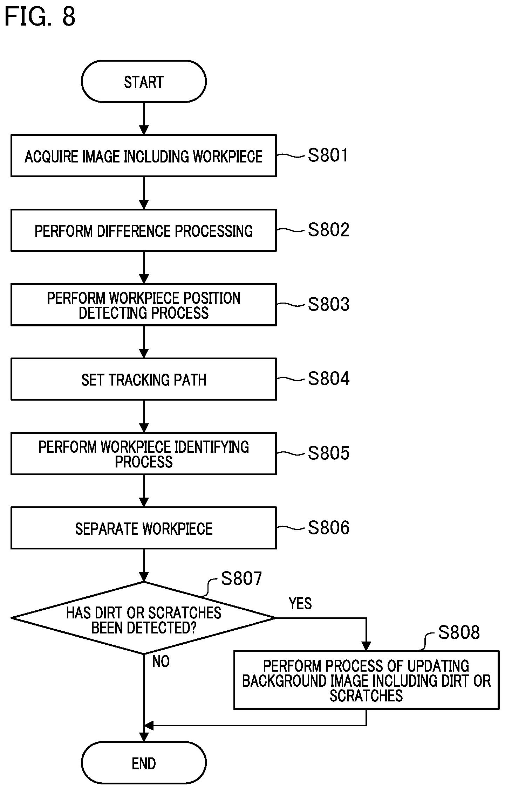

FIG. 8 is a flowchart illustrating a flow example of a workpiece sorting process according to the second embodiment. The processes of the steps in the flowchart illustrated in FIG. 8 are sequentially performed by causing the CPU which is a computer in the sorting device 100 or the control unit 107, or the like to execute a computer program stored in the memory.

When the flowchart of FIG. 8 starts, the CPU acquires an image including a workpiece 303 in Step S801 and performs difference processing between a previously acquired background image and the image of a workpiece when the workpiece 303 is placed on the conveyor belt in Step S802. The CPU performs a workpiece position detecting process on the basis of data of the difference processing in Step S803.

Then, the CPU sets a tracking path for the recognized workpieces in Step S804 and performs a workpiece identifying process using Raman scattering light of laser light in Step S805.

In Step S806, the CPU performs workpiece separation on the basis of the identification result of the identification process. That is, the CPU controls the air jet 309 such that the workpieces 303 such as resins are stored in a collection box 310 or another box 311 according to the identified resin types.

Then, in Step S807, the CPU determines whether dirt or scratches are newly generated on the conveyor belt on the basis of the identification result of the workpiece identifying process. Even when dirt or scratches are erroneously determined as a workpiece with a difference in luminance from the conveyor belt as illustrated in FIG. 6(A), the Raman scattering signal is different between the conveyor belt and the workpiece, and thus it is possible to determine the detected dirt or scratches.

When it is determined in Step S807 that dirt or scratches have been detected, the CPU performs a process of updating a background image including the detected dirt or scratches as a background in Step S808.

Here, Step S808 serves as an update step (an update means) of determining dirt or scratches using a Raman scattering signal from the dirt or scratches on the conveyor belt and updating the background image on the basis of the determined dirt or scratches. The update means periodically updates the background image. After the process of Step S808 has been performed or when the determination result of Step S807 is NO, the process flow of Steps S801 to S808 in FIG. 8 ends.

As described above, in the second embodiment, the background image is updated with a background image including a place different in luminance from the conveyor belt such as dirt or scratches newly generated on the conveyor belt by detecting dirt or scratches on the basis of the result of the workpiece identifying process. Accordingly, since the identification process does not need to be performed on dirt or scratches on the conveyor belt in the next time, it is possible to prevent a decrease in throughput.

### <Third embodiment>

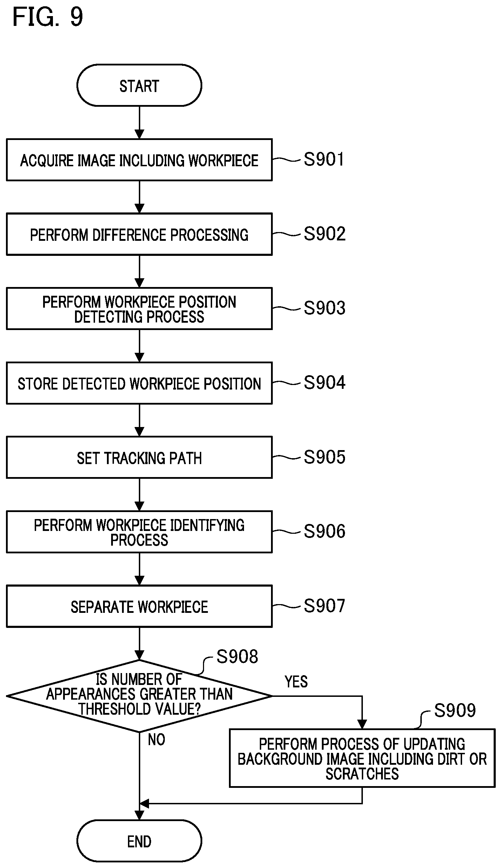

FIG. 9 is a flowchart illustrating a flow example of a workpiece sorting process in a sorting device according to a third embodiment. The processes of the steps in the flowchart illustrated in FIG. 9 are sequentially performed by causing the CPU which is a computer in the sorting device 100 or the control unit 107, or the like to execute a computer program stored in the memory.

When the flowchart of FIG. 9 starts, the CPU acquires an image including a workpiece in Step S901 and performs difference processing between a previously acquired background image and the image of a workpiece in Step S902. The CPU performs a workpiece position detecting process on the basis of the result of the difference processing in Step S903.

After the workpiece position detecting process has been performed, the CPU stores the detected positions of the workpieces 303 in Step S904.

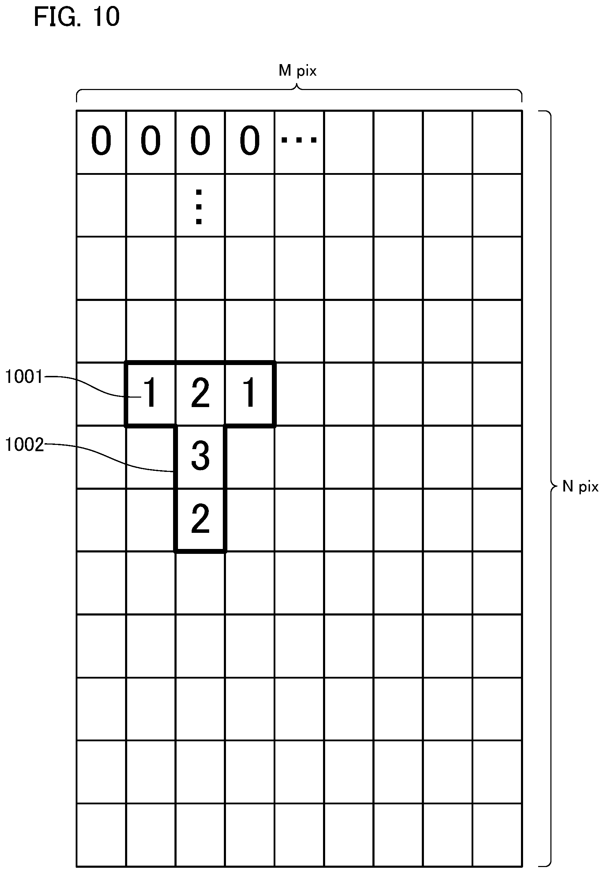

FIG. 10 is a diagram schematically illustrating an area of a conveyor belt of the sorting device according to the third embodiment. As illustrated in FIG. 10, the area of the conveyor belt is divided and set to M pixels in the width direction of the conveyor belt and N pixels in the length direction of the conveyor belt.

In Step S904, the CPU stores a pixel in which a workpiece 303 is recognized and stores the number of workpiece appearances 1001 in the pixel. Then, the CPU sets a tracking path for the detected workpieces 303 in Step S905 and performs a workpiece identifying process in Step S906.

In Step S907, the CPU performs workpiece separation on the basis of the identification result of the identification process. For example, the CPU controls the air jet 309 such that the workpieces 303 are stored in a collection box 310 or another box 311 according to the identified resin types of the workpieces 303.

In Step S908, the CPU determines whether the number of workpiece appearances in each pixel illustrated in FIG. 10 is greater than a predetermined threshold value. Dirt or scratches serving as a reason for erroneous recognition on the conveyor belt always appear as an area different in luminance from the conveyor belt.

Accordingly, when the determination result of Step S908 is YES, the CPU determines a pixel in which the number of workpiece appearances is greater than the predetermined threshold value as dirt or scratches and registers the dirt or scratches in the background image in Step S909.

That is, the number of appearances of an area different in luminance from the conveyor belt is summed, the determination result of Step S908 is YES when the number of appearances is greater than the predetermined threshold value, and the process flow proceeds to Step S909. In Step S909, the CPU performs a background image updating process of generating a background image including an area 1002 in which the number of appearances is greater than a threshold value (for example, 2).

Here, Step S909 serves as an update step (an update means) of updating the background image using an area in which the number of appearances as a position of a workpiece is equal to or greater than a predetermined threshold value as dirt or scratches. On the other hand, when the number of appearances is not greater than the threshold value, that is, when the determination result of Step S908 is NO, this series of processes ends, and the flowchart of FIG. 9 ends.

As described above, in the third embodiment, the background image is updated with a background image including a place different in luminance from the conveyor belt such as dirt or scratches newly generated on the conveyor belt by detecting dirt or scratches on the basis of the number of appearances of an area recognized as a workpiece. Accordingly, since the identification process does not need to be performed on dirt or scratches on the conveyor belt, it is possible to prevent a decrease in throughput.

### <Fourth embodiment>

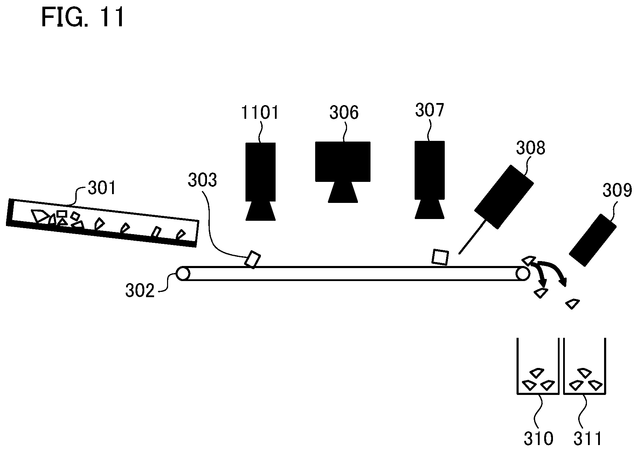

FIG. 11 is a side view illustrating a hardware configuration of a sorting system according to a fourth embodiment. The same constituents as in FIG. 5 will be referred to by the same reference signs. This configuration is different from the example illustrated in FIG. 5, in that a 3D camera 1101 is used as the workpiece position detection means.

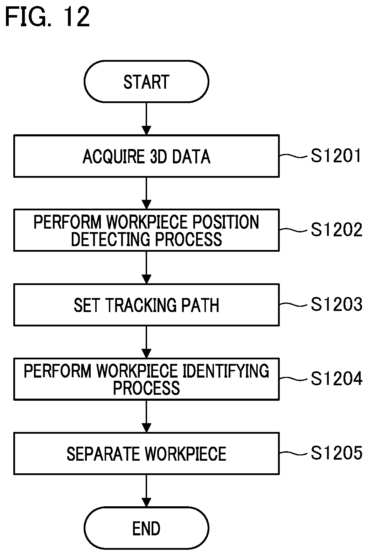

FIG. 12 is a flowchart illustrating a flow example of a workpiece sorting process that is performed by the sorting device according to the fourth embodiment. The processes of the steps in the flowchart illustrated in FIG. 12 are sequentially performed by causing the CPU which is a computer in the sorting device 100 or the control unit 107, or the like to execute a computer program stored in the memory.

In Step S1201, the CPU acquires 3D data of a workpiece. That is, height information of a workpiece in addition to a position or a size of the workpiece is acquired using the 3D camera 1101.

Then, in Step S1202, the CPU performs a workpiece position detecting process. At that time, a height of an object is compared with a predetermined threshold value, an object of a height equal to or greater than the predetermined threshold value is recognized as a workpiece, and a workpiece position of the object recognized as a workpiece is detected. Here, Step S1202 serves as a position detecting step of detecting a position of a workpiece by determining the height of the workpiece on the basis of the predetermined threshold value.

On the other hand, a background image may be updated by registering an object of a height less than the predetermined threshold value, for example, as dirt or scratches in the background image. That is, Step S1202 serves as an update step (an update means) of updating the background image using an area in which a height of an object on the conveyor belt is less than a predetermined threshold value as dirt or scratches.

Then, in Step S1203, the CPU sets a tracking path on the basis of the detected workpiece position. In Step S1204, the CPU irradiates a workpiece on the tracking path with laser light and identifies a resin type of the workpiece on the basis of Raman scattering light. Then, in Step S1205, the CPU performs workpiece separation according to the identified resin type.

In this way, by recognizing an object of a height equal to or greater than a predetermined value as a workpiece such as a resin and recognizing an object of a height less than the predetermined threshold value as dirt or scratches on the conveyor belt, the dirt or scratches on the conveyor belt is not recognized as a workpiece. Accordingly, it is possible to set a correct tracking path and to reduce erroneous recognition of a workpiece.

In this way, in the fourth embodiment, since a workpiece is three-dimensionally measured, an identification process is not erroneously performed on dirt or scratches on the conveyor belt, and it is possible to prevent a decrease in throughput.

In the fourth embodiment, a height of a workpiece is acquired using a 3D camera, but any sensor may be used as long as it can measure and acquire a height of a workpiece. For example, a height of a workpiece may be acquired using a sensor such as a ranging sensor or a Light Detection And Ranging (LiDAR) sensor.

### <Fifth embodiment>

An article (such as a semiconductor IC device, a liquid crystal display device, or an MEMS) manufacturing method using the sorting device or the sorting system according to the first to fourth embodiments will be described below. For example, substrates are sorted using the sorting device or the sorting system according to the embodiments. Then, articles are manufactured, for example, by performing a step of applying a photoresist to a substrate or the like, a step of exposing a substrate (such as a wafer or a glass substrate) with a photo resist applied thereon to light, or a step of developing the substrate (the photoresist) on the substrates and processing the developed substrate through other known steps.

The other known steps include etching, resist removal, dicing, bonding, and packaging. With this article manufacturing method, it is possible to manufacture an article with higher quality without causing a decrease in throughput in comparison with that in the related art.

While the present invention has been described above in detail in conjunction with exemplary embodiments thereof, the present invention is not limited to the embodiments and can be modified in various forms or in combination of the embodiments on the basis of the gist of the present invention, which are not excluded from the scope of the present invention. The present invention includes following combinations.

### (Cross-reference to related application)

Priority is claimed on Japanese Patent Application No. 2024-002274, filed January 11, 2024. The content of this Japanese Patent Application is incorporated herein by reference.

## Claims

1. A sorting device comprising:
a conveyance means configured to convey a workpiece using a conveyor belt;
a position detection means configured to detect a position of a workpiece using a difference between an image including the workpiece on the conveyor belt and a background image excluding the workpiece;
a determination means configured to determine a type of the workpiece at the position detected by the position detection means; and
an update means configured to update the background image.

2. The sorting device according to claim 1, further comprising a tracking path setting means configured to set a tracking path on the basis of the position of the workpiece.

3. The sorting device according to claim 1 or 2, further comprising an imaging means configured to image a conveyance surface of the conveyor belt,
wherein the update means updates the background image on the basis of an image acquired by the imaging means when the workpiece is not placed on the conveyance surface of the conveyor belt.

4. The sorting device according to any one of claims 1 to 3, wherein the update means determines dirt or scratches using a Raman scattering signal from dirt or scratches on the conveyor belt and periodically updates the background image on the basis of the determined dirt or scratches.

5. The sorting device according to any one of claims 1 to 4, wherein the update means updates the background image including dirt or scratches at least once while the conveyor belt goes around once.

6. The sorting device according to any one of claims 1 to 5, wherein the update means updates the background image using an area in which the number of times of appearance of the position of the workpiece is equal to or greater than a predetermined threshold value as dirt or scratches.

7. The sorting device according to any one of claims 1 to 6, wherein the update means updates the background image using an area in which a height of an object on the conveyor belt is less than a predetermined threshold value as dirt or scratches.

8. The sorting device according to any one of claims 1 to 7, wherein the background image includes dirt or scratches on the conveyor belt.

9. The sorting device according to any one of claims 1 to 8, wherein the update means periodically updates the background image.

10. A sorting device comprising:
a conveyance means configured to convey a workpiece;
a position detection means configured to detect a position of a workpiece; and
a determination means configured to determine a type of the workpiece at the position of the workpiece detected by the position detection means,
wherein the position detection means detects the position of the workpiece by determining a height of the workpiece on the basis of a predetermined threshold value.

11. A sorting method comprising:
a conveyance step of conveying a workpiece using a conveyor belt;
a position detection step of detecting a position of a workpiece using a difference between an image including the workpiece on the conveyor belt and a background image excluding the workpiece;
a determination step of determining a type of the workpiece at the position detected in the position detection step; and
an update step of updating the background image.

12. A sorting method comprising:
a conveyance step of conveying a workpiece;
a position detection step of detecting a position of a workpiece; and
a determination step of determining a type of the workpiece at the position of the workpiece detected in the position detection step,
wherein the position detection step includes detecting the position of the workpiece by determining a height of the workpiece on the basis of a predetermined threshold value.
